# EUROPEAN PATENT SPECIFICATION

(11) **EP 0 517 472 B1**
(45) Date of publication and mention of the grant of the patent: **25.01.1995**
(21) Application number: 92305025.6
(22) Date of filing: 02.06.1992
(51) Int. Cl.: C01B 31/04

(54) **Process for producing fine graphite particles**
Verfahren zur Herstellung von feinen Graphitteilchen
Procédé de fabrication de particules fines de graphite

(30) Priority: 03.06.1991 JP 229801/91
(43) Date of publication of application: 09.12.1992
(73) Proprietor: NIPPON OIL COMPANY, LIMITED, Tokyo (JP)
(72) Inventor: Sakamoto, Takayoshi, Kanagawa-ken (JP); Kato, Osamu, Yokohama-shi, Kanagawa-ken (JP); Kobayashi, Takashi, Kawasaki-shi, Kanagawa-ken (JP)
(74) Representative: Cropp, John Anthony David

(56) References cited:
- PATENT ABSTRACTS OF JAPAN vol. 12, no. 223 (C-507)(3070) 24 June 1988 and JP-A-63 021 208
- PATENT ABSTRACTS OF JAPAN vol. 12, no. 391 (C-537)(3238) 18 October 1988 and JP-A-63 139 011
- PATENT ABSTRACTS OF JAPAN vol. 13, no. 372 (C-627)(3720) 17 August 1989 and JP-A-1 126 213
- PATENT ABSTRACTS OF JAPAN vol. 8, no. 225 (C-247)(1662) 16 October 1984 and JP-A-59 111 907
- PATENT ABSTRACTS OF JAPAN vol. 13, no. 408 (C-634)(3756) 8 September 1989 and JP-A-1 148 704

## Description

### Background of the Invention

The present invention relates to a process for producing fine graphite particles.

According to a conventional method for producing fine graphite particles, a block-like graphite is produced and then pulverized into fine graphite particles. In this conventional method, however, not only is great energy required for the pulverization but also since the resulting fine graphite particles are not uniform in diameter, it is necessary to perform a separating operation in order to. obtain a uniforn particle diameter. Further disadvantages are that the yield is very low, the fine graphite particles obtained are generally scale-like and it is difficult to obtain particles of a uniform diameter.

Also known are methods involving melt-extruding a carbon precursor and then cutting the extrudate into particles, and methods wherein a carbon precursor is melted and then jetted into the air or a solution through a nozzle of a small diameter. However, these methods do not produce fine graphite particles having highly developed graphite layer faces.

It is an object of the present invention to provide a process for producing fine graphite particles having a uniform diameter.

It is another object of the present invention to provide a process for producing fine graphite particles of a uniform diameter having highly developed graphite layer faces.

Having made studies about the production of carbon and graphite using a carbon precursor and also about a shaping method for the carbon precursor, the present inventors found out that by contacting a fibrous carbon precursor with a solvent and then removing the solvent there occurred radial cracks at approximately equal intervals in the carbon precursor and there could be produced fine graphite particles by utilizing these cracks effectively. In this way we accomplished the present invention.

### Summary of the Invention

In a first aspect of the present invention there is provided a process for producing fine graphite particles, comprising contacting a spun-pitch fibrous carbon precursor with a solvent, then removing the solvent, thereafter subjecting the fibrous carbon precursor to an infusibilizing treatment and a carbonization/graphitization treatment and a subsequent pulverizing treatment.

In a second aspect of the present invention there is provided a process for producing fine graphite particles, comprising contacting a spun-pitch fibrous carbon precursor with a solvent, then removing the solvent, thereafter subjecting the fibrous carbon precursor to a pulverizing treatment and then to an infusibilizing treatment and a carbonization/graphitization treatment.

In a third aspect of the present invention there is provided a process for producing fine graphite particles, comprising contacting a spun-pitch fibrous carbon precursor with a solvent, then removing the solvent, thereafter subjecting the fibrous carbon precursor to an infusibilizing treatment and a carbonization/graphitizing treatment, while subjecting it to a pulverizing treatment during the said infusibilizing treatment and/or the said carbonizing treatment.

### Brief Description of the Drawing

Fig. 1 is an electron micrograph of a carbon precursor having slits, obtained in Example 1 of the present invention;
Fig. 2 is an electron micrograph of fine graphite particles obtained in Example 1 of the present invention; and
Fig. 3 is an electron micrograph of particles obtained in Comparative Example 1 as will be described later herein.

### Detailed Description of the Preferred Embodiments

The "fibrous carbon precursor" as referred to herein is obtained by melt-spinning a carbonaceous pitch.

As the carbonaceous pitch there is used a coal- or petroleum-based pitch having a softening point of usually 100° to 400°C, preferably 150° to 350°C. Both optically isotropic pitches and anisotropic pitches are employable as carbonaceous pitches, but optically anisotropic pitches having an optically anisotropic phase content of 60 to 100 vol% are particularly preferred.

The carbonaceous pitch is melt-spun by a known method to afford a fibrous carbon precursor.

In the present invention, the fibrous carbon precursor is first contacted with a solvent. Any solvent which can swell the carbon precursor is suitable. Examples are hydrocarbon solvents, mixtures of two or more kinds of hydrocarbon solvents, polar organic solvents, mixtures of two or more kinds of polar organic solvents, mixtures of hydrocarbon solvents and polar organic solvents, and aqueous solutions of polar organic solvents.

More particularly, as examples of hydrocarbon solvents there are mentioned hydrocarbons having about 5 to about 12 carbon atoms such as n-hexane, cyclohexane, pentane and benzene, and as examples of polar solvents there are mentioned oxygen-containing hydrocarbons having up to 8 carbon atoms such as methanol, ethanol, butanol and acetone, with acetone being particularly preferred.

As an example of a hydrocarbon solvent - polar solvent mixture there is mentioned acetone-benzene. In this case, for example, the proportion of acetone is 100 parts by weight and that of benzene is usually in the range of 0.1 to 40, preferably 1 to 30, parts by weight.

The method of contacting the fibrous carbon precursor with the solvent is not specially limited. For example, the fibrous carbon precursor may be immersed in the solvent, or the solvent may be sprayed onto the fibrous carbon precursor.

Suitable conditions for the contact of the solvent can be selected according to the fiber diameter and properties of the fibrous carbon precursor used and the kind of the solvent used. For example, in the case of immersion of the fibrous carbon precursor in the solvent, the immersion time is usually in the range of 0.01 second to 1,000 hours, preferably 0.1 second to 100 hours, more preferably 0.5 second to 50 hours.

The immersion time is preferably at least 0.01 second, as a shorter immersion time may make it difficult to form ring-like or spiral slits in the fibrous carbon precursor. The immersion time is preferably not more than 1,000 hours, as a longer immersion time may make it difficult to retain the fibrous shape.

In general, when the molecular weight and softening point of the fibrous carbon precursor is high, or when the fiber diameter is large, it is desirable to set the immersion time rather long.

According to the present invention, the fibrous carbon precursor is contacted with a solvent and then the solvent is removed. The solvent removing method is not specially limited and a suitable method can be selected according to the kind of the solvent used and conditions for the contact. For example, there may be adopted a method wherein the fibrous carbon precursor is immersed in a solvent, then pulled up from the solvent and is allowed to stand at room temperature; a method wherein the solvent used is evaporated under reduced pressure or by raising the temperature, or a combination of two or more thereof.

The solvent removing temperature is not specially limited; usually it is higher than the solidifying point of the solvent used.

Particularly, in the case where the solvent removing operation is followed by a pulverizing treatment, it is desirable that the solvent removing temperature be lower than the temperature of an infusibilizing treatment, and usually it is in the range of -40° to 150°C, preferably 0° to 100°C.

Alternatively, the solvent removing operation and the infusibilizing treatment may be done simultaneously.

In the present invention, slits are formed in the fibrous carbon precursor by contacting the fibrous carbon precursor with a solvent and then removing the solvent. Such slits are usually ring-like or spiral and are formed in a direction of approximately 90° to 45°, preferably 85° to 60°, relative to the fibre axis.

According to the present invention, the fibrous carbon precursor is contacted with a solvent, then the solvent is removed, followed by an infusibilizing treatment and a carbonizing treatment and a subsequent pulverizing treatment. Alternatively after the contact of the fibrous carbon precursor with a solvent and subsequent removal of the solvent, a pulverization treatment is performed, further followed by an infusibilization treatment and a carbonization treatment. A third alternative is that the fibrous pulverization treatment is carried out during infusibilization treatment and/or during carbonization treatment.

The method of the pulverization treatment is not specially limited requiring only that a physical force sufficient to effect pulverization is imparted to the fibrous carbon precursor, for example, by shaking, grinding, or agitation. For example, there may be used a vibrating apparatus such as a shaking machine or an ultrasonic wave generator, a grinding apparatus such as a pulverizer, a ball mill, or a mortar, or an agitator. A method not imposing a strong compressive stress on the product being treated is desirable.

The method of the infusibilization treatment is not specially limited. This treatment can be done in a conventional manner, usually in an oxidizing gas atmosphere, at a temperature of usually 50° to 400°C, preferably 100° to 350°C, usually for 10 minutes to 100 hours. As examples of the said oxidizing gas there are mentioned air, oxygen, nitrogen oxide, sulfur oxide, halogen, ozone, or a mixture thereof. The pressure of the oxidizing gas is not specially limited, but usually it is atmospheric pressure.

As to the carbonization treatment, no special limitation is placed thereon, and it can be carried out in a conventional manner. The carbonization temperature is usually in the range of 600° to 3,500°C, preferably 800° to 3,000°C, most preferably 1,000° to 3,000°C. The time required for the carbonization treatment is usually in the range of 1 second to 10 hours, preferably 5 seconds to 5 hours.

According to the present invention, by contacting the fibrous carbon precursor with a solvent and thereafter removing the solvent, there can be formed ring-like or spiral slits which are substantially perpendicular to the fiber axis of the fibrous carbon precursor, and then by cutting the slits under vibration or using any other suitable means, there can be produced fine graphite particles. According to the process of the present invention, fine graphite particles having a uniform diameter can be obtained in high yield.

Further, the fine graphite particles obtained in the present invention have a highly developed graphite layer surface.

Moreover, the fine graphite particles according to the present invention are highly uniform in diameter and shape and are each in a fine cylindrical shape, with the bottom diameter and the height being almost equal to each other. There characteristics can afford a material of high pseudo-isotropy for use as a raw material of a high grade, graphite powder, molding material.

Additionally, in the case where the fine graphite particles are incorporated as a filler into a resin to impart electroconductivity to the resin, there is obtained a mixed state of a three-dimensionally high pseudo-isotropy due to the above-mentioned characteristics, so that a three-dimensionally isotropic electroconductivity can be imparted to the resin. Particularly in the case of a thin film-like shaped article, a marked difference is recognized as compared with the conventional graphite powder.

The following examples are given to further illustrate the present invention, but the invention is not limited thereto.

### Example 1

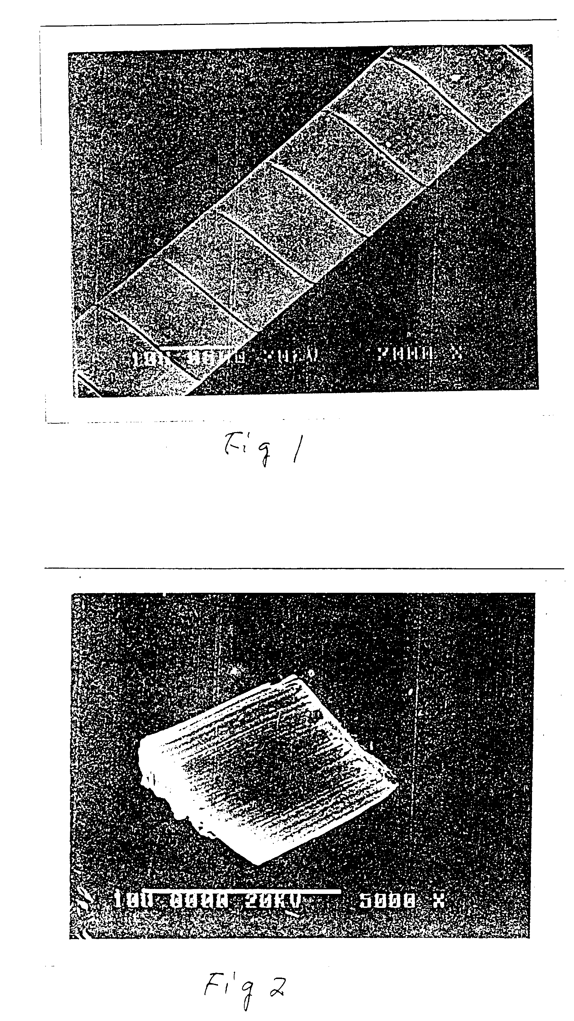

A petroleum pitch having a softening point of 280°C and an optically anisotropic phase content of 95 vol% was melt-spun to afford a fibrous carbon precursor having an average diameter of 12 » m. The fibrous carbon precursor was then immersed in acetone for 12 hours, then pulled up and dried at room temperature, whereby a carbon precursor having slits substantially perpendicular to the fiber axis was obtained. Fig. 1 is an electron micrograph thereof.

Thereafter, the temperature was raised up to 300°C at a rate of 1°C/min in air and the carbon precursor was held at this temperature for 1 hour and thereby rendered infusible. Then, the temperature was raised up to 650°C at a rate of 5°C/min in nitrogen and the carbon precursor thus rendered infusible was held at this temperature for 15 minutes, followed by further heating up to 2,500°C in nitrogen to carry out a carbonization treatment, thereby affording a carbon fiber having slits.

The carbon fiber was then ground lightly in a mortar to cut along the slit portions. The resulting fine graphite particles had a diameter of about 10 »m and a height of about 5 to 10 »m. Fig. 2 is an electron micrograph thereof.

The fine graphite particles were measured for X-ray diffraction to find that the interlayer spacing, d(002), of graphite crystals was 3.401 Å, the stack of layer faces, Lc, was 204 Å, and a layer face extent, La, was 203 Å. A highly developed graphite structure was observed.

### Example 2

A petroleum pitch having a softening point of 280°C and an optically anisotropic phase content of 95 vol% was melt-spun to afford a fibrous carbon precursor having an average diameter of 12 »m. The fibrous carbon precursor was immersed in acetone for 12 hours, then pulled up and dried at room temperature, whereby a carbon precursor having slits substantially perpendicular to the fiber axis was obtained.

The carbon precursor was cut along the slit portions by the radiation of ultrasonic wave in water.

Thereafter, the temperature was raised up to 300°C at a rate of 1°C/min in air, followed by a standing at this temperature for 1 hour, to effect an infusibilization treatment, then the temperature was raised up to 650°C at a rate of 5°C/min in nitrogen, followed by standing at this temperature for 15 minutes, then the temperature was further raised up to 2,500°C in nitrogen, to effect a carbonization treatment, thereby affording fine graphite particles.

The fine graphite particles had a diameter of about 10 »m and a height of about 5 to 10 »m.

The fine graphite particles were measured for X-ray diffraction to find that the interlayer spacing, d(002), of graphite crystals was 3.410 Å, the stack of layer faces, Lc, was 190 Å, and a layer face extent, La, was 196 Å. A highly developed graphite structure was observed. Comparative Example 1

The fibrous carbon precursor obtained in Example 1 was rendered infusible and carbonized in the same manner and conditions as in Example 1 to obtain graphitized fibers having a diameter of 10 »m.

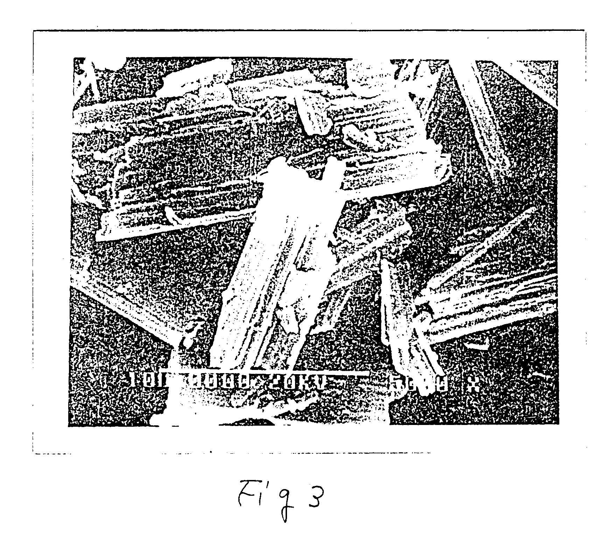

The graphitized fibers were then ground in a mortar to afford a scale-like powder of non-uniform particles. The particle diameter was also non-uniform. Fig. 3 is an electron micrograph thereof.

## Claims

1. A process for producing fine graphite particles, which process comprises contacting a spun-pitch fibrous carbon precursor with a solvent, then removing the solvent, thereafter subjecting the fibrous carbon precursor to an infusibilization treatment, a carbonization/graphitization treatment, and a pulverization treatment.

2. A process as set forth in claim 1, wherein said pulverization treatment is performed after said carbonization/graphitization treatment.

3. A process as set forth in claim 1, wherein said pulverization treatment is performed between said solvent removing treatment and said infusibilization treatment.

4. A process as set forth in claim 1, wherein said pulverization treatment is performed during at least one of said infusibilization treatment and said carbonization/graphitization treatment.

5. A process as set forth in any one of the preceding claims, wherein the fibrous carbon precursor has been obtained by melt-spinning an optically anisotropic pitch having an optically anisotropic phase content of 60 to 100 vol%.

6. A process as set forth in any one of the preceding claims, wherein the solvent is a hydrocarbon solvent, a mixture of two or more kinds of hydrocarbon solvents, a polar organic solvent, a mixture of two or more kinds of polar organic solvents, a mixture of hydrocarbon solvents and polar organic solvents or an aqueous solution of polar organic solvent, wherein the solvent is capable of swelling the fibrous carbon precursor.

7. A process as set forth in claim 6, wherein the hydrocarbon solvent is a hydrocarbon having from 5 to 12 carbon atoms.

8. A process as set forth in claim 6, wherein the polar organic solvent is an alcohol or ketone having up to 8 carbon atoms.

9. A process as set forth in claim 8, wherein the ketone is acetone.

10. A process as set forth in any one of the preceding claims, wherein the spun-pitch fibrous carbon precursor is immersed in the solvent for about 0.01 second to about 1,000 hours.

11. A process as set forth in any one of the preceding claims, wherein the pulverization treatment is carried out by shaking means, grinding means, or agitation means.

12. A process as set forth in any one of the preceding claims, wherein the infusibilization treatment is carried out in an oxidizing gas atmosphere at a temperature of from 50°C to 400°C for from 10 minutes to 100 hours.

13. A process as set forth in any one of the preceding claims, wherein the carbonization/graphitization treatment is carried out at a temperature of from 600°C to 3,500°C for a period of time sufficient to effect carbonization.

## Patentansprüche

1. Verfahren zur Herstellung von feinen Graphitteilchen, bei dem man einen Vorläufer aus gesponnenem Pech in Form von faserigem Kohlenstoff mit einem Lösungsmittel in Kontakt bringt, dann das Lösungsmittel entfernt und diesen Vorläufer aus faserigem Kohlenstoff danach einer Behandlung zum Umschmelzbarmachen, einer Carbonisierungs-/Graphitisierungsbehandlung sowie der Pulverisierung unterwirft.

2. Verfahren gemäß Anspruch 1, bei dem die Pulverisierung nach der Behandlung zum Carbonisieren und Graphitisieren durchgeführt wird.

3. Verfahren gemäß Anspruch 1, bei dem die Pulverisierung zwischen der Entfernung des Lösungsmittels und der Behandlung zum Unschmelzbarmachen ausgeführt wird.

4. Verfahren gemäß Anspruch 1, bei dem die Pulverisierung während mindestens einer der Behandlungen zum Unschmelzbarmachen und zum Carbonisieren und Graphitisieren ausgeführt wird.

5. Verfahren gemäß einem der vorstehenden Ansprüche, bei dem der faserige Kohlenstoffvorläufer durch Schmelzspinnen eines optisch anisotropen Pechs mit einem Gehalt an optisch anisotroper Phase von 60 bis 100 Vol.-% erhalten wurde.

6. Verfahren gemäß einem der vorstehenden Ansprüche, bei dem das Lösungsmittel ein Kohlenwasserstofflösungsmittel, ein Gemisch aus zwei oder mehr Arten von Kohlenwasserstofflösungsmitteln, ein polares organisches Lösungsmittel, eine Mischung aus zwei oder mehr Arten polarer organischer Lösungsmittel, eine Mischung aus Kohlenwasserstoff- und polaren organischen Lösungsmitteln oder eine wäßrige Lösung polarer organischer Lösungsmittel darstellt, wobei das Lösungsmittel den Vorläufer in Form von faserigem Kohlenstoff aufquellen kann.

7. Verfahren gemäß Anspruch 6, bei dem das Kohlenwasserstofflösungsmittel ein Kohlenwasserstoff mit 5 bis 12 Kohlenstoffatomen ist.

8. Verfahren gemäß Anspruch 6, bei dem das polare organische Lösungsmittel einen Alkohol oder ein Keton mit bis zu 8 Kohlenstoffatomen darstellt.

9. Verfahren gemäß Anspruch 8, bei dem das Keton Aceton ist.

10. Verfahren gemäß einem der vorstehenden Ansprüche, bei dem der Vorläufer aus gesponnenem Pech in Form von faserigem Kohlenstoff für 0,01 Sekunden bis etwa 1000 Stunden in das Lösungsmittel eingetaucht wird.

11. Verfahren gemäß einem der vorstehenden Ansprüche, bei dem die Pulverisierung mit Hilfe einer Schüttel-, Mahl- oder Rührvorrichtung durchgeführt wird.

12. Verfahren gemäß einem der vorstehenden Ansprüche, bei dem die Behandlung zum Unschmelzbarmachen für 10 Minuten bis 100 Stunden in einer oxidierenden Gasatmosphäre bei einer Temperatur von 50 °C bis 400 °C ausgeführt wird.

13. Verfahren gemäß einem der vorstehenden Ansprüche, bei dem die Behandlung zum Carbonisieren und Graphitisieren für eine zur Carbonisierung ausreichenden Zeit bei einer Temperatur von 600 °C bis 3500 °C durchgeführt wird.

## Revendications

1. Procédé pour la fabrication de fines particules de graphite, qui comprend la mise en contact avec un solvant d'un précurseur de carbone fibreux obtenu par filage de brai, puis l'élimination du solvant, et ensuite la soumission du précurseur de carbone fibreux à un traitement d'infusibilisation, à un traitement de carbonisation et de graphitisation et à un traitement de pulvérisation.

2. Procédé suivant la revendication 1, dans lequel ce traitement de pulvérisation est réalisé après ce traitement de carbonisation et de graphitisation.

3. Procédé suivant la revendication 1, dans lequel ce traitement de pulvérisation est réalisé entre ce traitement d'élimination de solvant et ce traitement d'infusibilisation.

4. Procédé suivant la revendication 1, dans lequel ce traitement de pulvérisation est réalisé pendant l'un au moins de ce traitement d'infusibilisation et ce traitement de carbonisation et de graphitisation.

5. Procédé suivant l'une quelconque des revendications précédentes, dans lequel ce précurseur de carbone fibreux a été obtenu par filage à l'état fondu d'un brai optiquement anisotrope ayant une teneur en phase optiquement anisotrope de 60 à 100% en volume.

6. Procédé suivant l'une quelconque des revendications précédentes, dans lequel le solvant est un solvant hydrocarboné, un mélange de deux ou plusieurs sortes de solvants hydrocarbonés, un solvant organique polaire, un mélange de deux ou plusieurs sortes de solvants organiques polaires, un mélange de solvants hydrocarbonés et de solvants organiques polaires ou une solution aqueuse de solvant organique polaire, dans lequel le solvant est capable de faire gonfler le précurseur de carbone fibreux.

7. Procédé suivant la revendication 6, dans lequel le solvant hydrocarboné est un hydrocarbure ayant de 5 à 12 atomes de carbone.

8. Procédé suivant la revendication 6, dans lequel le solvant organique polaire est un alcool ou une cétone ayant jusqu'à 8 atomes de carbone.

9. Procédé suivant la revendication 8, dans lequel la cétone est l'acétone.

10. Procédé suivant l'une quelconque des revendications précédentes, dans lequel le précurseur de carbone fibreux obtenu par filage de brai est plongé dans le solvant pendant une période d'environ 0,01 seconde à environ 1.000 heures.

11. Procédé suivant l'une quelconque des revendications précédentes, dans lequel le traitement de pulvérisation est effectué par secousses, broyage ou agitation.

12. Procédé suivant l'une quelconque des revendications précédentes, dans lequel le traitement d'infusibilisation est effectué dans une atmosphère de gaz oxydant à une température comprise entre 50°C et 400°C pendant une période de 10 minutes à 100 heures.

13. Procédé suivant l'une quelconque des revendications précédentes, dans lequel le traitement de carbonisation et de graphitisation est effectué à une température comprise entre 600°C et 3.500°C pendant une période de temps suffisante pour réaliser la carbonisation.
